# EUROPÄISCHE PATENTSCHRIFT

(11) **EP 3 974 938 B1**
(45) Veröffentlichungstag und Bekanntmachung des Hinweises auf die Patenterteilung: **19.07.2023**
(21) Anmeldenummer: 21182376.0
(22) Anmeldetag: 29.06.2021
(51) Int. Cl.: G05D 23/19

(54) **HEIZUNGSSTEUERUNGSVERFAHREN**
METHOD FOR CONTROLLING A HEATING ELEMENT
MÉTHODE DE CONTRÔLE D'UN ÉLÉMENT CHAUFFANT

(30) Priorität: 30.06.2020 CN 202010621852
(43) Veröffentlichungstag der Anmeldung: 30.03.2022
(73) Patentinhaber: Oceanwell (Xiamen) Industrial Co., Ltd., Xiamen, Fujian (CN)
(72) Erfinder: ZHANG, Qingping, Haicang Dist. Xiamen (CN); ZHUANG, Yu, Haicang Dist. Xiamen (CN); ZOU, Xianguo, Haicang Dist. Xiamen (CN)
(74) Vertreter: Rätsch, Caroline

(56) Entgegenhaltungen:
- WO-A1-00/77456
- WO-A1-2017/006137
- CN-A- 104 423 402

## Beschreibung

### Technisches Gebiet

Die vorliegende Erfindung betrifft das Gebiet der Heizungssteuerung, insbesondere ein Heizungssteuerungsverfahren sowie eine Heizungssteuerungsvorrichtung zur Reduktion von Flackerstörungen.

### Stand der Technik

Bei intelligenten Toiletten mit Wasseraufheizung erfolgt die thermostatische Temperaturregelung wie folgt: Am Wasserzulauf des Heizsystems eines elektrischen Warmwasserbereiters ist ein Wasserdurchflusssensor angeordnet, um die in das Heizsystem einströmende Wasserdurchflussmenge zu erfassen und in ein elektronisches Signal umzuwandeln, das an einen Prozessor eines Computerchips des Steuersystems weitergegeben wird. Am Wasserablauf ist ein Temperaturfühler angeordnet. Das erfasste Temperaturergebnis kann ebenfalls an den Boardprozessor weitergegeben werden. Nach der Berechnung durch den Prozessor wird das Heizsystem anhängig von dem Ergebnis gesteuert und die Heizleistung eingestellt, um die Wasseraustrittstemperatur konstant zu halten.

Bei intelligenten Toiletten mit Wasseraufheizung ist bekannt, dass eine große Wasserdurchflussmenge eine vergleichsweise gute Reinigungswirkung und einen hohen Bequemlichkeitsgrad bereitstellen kann. In der Regel kann es jedoch aufgrund einer unzulänglichen Heizleistung vorkommen, dass im späten Stadium des Spülzyklus die Wassertemperatur deutlich absinkt. Deshalb muss die Wasserheizleistung erhöht werden, wenn es notwendig ist, mit einer vergleichsweise großen Durchflussmenge bei konstanter Temperatur zu spülen. Nach dem Erhöhen der Leistung wird hinsichtlich der Steuerungsanforderungen an die konstante Wasseraustrittstemperatur die Leistungsabgabe reguliert, was leicht dazu führt, dass es bei Messungen von Flackern im Rahmen der elektromagnetischen Verträglichkeit (EMV) zu Grenzwertüber- bzw. -unterschreitungen kommt.

Das vorhandene Lösungskonzept besteht darin, Heizbaugruppen in zwei oder drei Stufen zu unterteilen und unabhängig voneinander anzusteuern. Beispielsweise werden 1600 W in zwei Hälften mit jeweils 800 W geteilt. Somit kann mittels Kombinationssteuerung umgesetzt werden, dass in den meisten Fällen jeweils nur ein Teil vom Heizgerät einer Leistungsregulierung unterliegt (hierfür ist es üblich, das Tastverhältnis des PWM-Signals zu regulieren), wodurch das Schwankungsausmaß bei jeder einzelnen Leistungsregulierung soweit reduziert wird, dass die bestimmten Anforderungen bei der Flackermessung erfüllt werden können. Derartige mehrstufige Steuerungsmöglichkeiten können zu einer größeren Komplexität der Produktstruktur und der elektronischen Steuerungsschaltung führen, was die Bauteilkosten und den Montageaufwand erhöht.

CN 104 423 402 A zeigt zur Lösung des Problems, dass der Stromfluss durch ein Ein- und Austasten mittels PWM Signalen so zu steuern ist, dass die Zeitdauern, in denen ein- oder ausgetastet ist, stets kleiner als die Hälfte der Zyklusdauer der Wechselspannungsversorgung ist, die Frequenz des PWM-Signals also beispielsweise mindestens das Vierfache der Spannungsversorgungsfrequenz sein soll. Nach diesem Zerhacken des Signals wird eine Glättung durchgeführt, so dass sich wieder ein näherungsweise sinusförmiges Ansteuersignal mit geringerer Amplitude ergibt. In der CN 104 423 402 A fallen die Nulldurchgänge des geglätteten Ansteuersignals mit denen des ursprünglichen Spannungsversorgungssignals zusammen; es gibt aber eine Reihe von Wechseln zwischen Low- und High Pegel des PWM Signals, die nicht mit den Nulldurchgängen der Spannungsversorgung zusammenfallen.

### Offenbarung der Erfindung

Ausgehend von den aus dem Stand der Technik bekannten technischen Problemen stellt die vorliegende Erfindung ein Aufheizverfahren bereit, bei dem eine Wassertemperatursteuerung während des Aufheizvorgangs umgesetzt wird, wobei die Anforderungen bei der Messung von Flackerstörungen im Rahmen der elektromagnetischen Verträglichkeit erfüllt werden, so dass die Komplexität der Produktstruktur reduziert werden kann.

Zur Lösung der technischen Probleme wird ein Heizungssteuerungsverfahren zur Reduktion von Flackerstörungen mit den folgenden Schritten vorgeschlagen:
S1: Einstellen einer Zieltemperatur;
S2: Erfassen von einer Wassereintrittstemperatur und einer Wasseraustrittstemperatur;
S3: Berechnen der zum Aufheizen erforderlichen Ausgangsleistung auf Grundlage der erfassten Wassereintrittstemperatur und Wasseraustrittstemperatur sowie der eingestellten Zieltemperatur;
S4: Umrechnen der Ausgangsleistung in eine Tastverhältniskombination von PWM-Signalen, Steuern der jeweiligen Anzahl der oberen bzw. unteren Takte der Modulationssignale basierend auf der Tastverhältniskombination von PWM-Signalen;
S5: Steuern des Aufheizvorgangs basierend auf der jeweiligen Anzahl der oberen bzw. unteren Takte der Modulationssignale;
S6: Ermitteln, ob ein Stoppbefehl vorliegt; falls ja, Beenden des Aufheizvorgangs; falls nein, Rückkehr zu Schritt S2.

Vorzugsweise wird vor dem Einstellen der Zieltemperatur in Schritt S1 eine Zuordnungsbeziehung zwischen der Ausgangsleistung und der PWM-Tastverhältniskombination ermittelt.

Vorzugsweise erfolgt das Berechnen der zum Aufheizen erforderlichen Ausgangsleistung basierend auf der erfassten Wassereintrittstemperatur und Wasseraustrittstemperatur sowie der eingestellten Zieltemperatur in Schritt S3 unter Verwendung eines PID-Regelverfahrens.

Vorzugsweise umfasst das Berechnen der zum Aufheizen erforderlichen Ausgangsleistung basierend auf der erfassten Wassereintrittstemperatur und Wasseraustrittstemperatur sowie der eingestellten Zieltemperatur in Schritt S3 eine Einbeziehung eines Temperaturtendenz- und Leistungsfeedbacks als Korrektur.

Vorzugsweise umfassen die PWM-Signale eine erste Untergruppe von PWM-Signalen und eine zweite Untergruppe von PWM-Signalen, wobei die erste Untergruppe von PWM-Signalen 5 Arten von Tastverhältnissen umfasst, die jeweils 0/4, 1/4, 2/4, 3/4, 4/4 betragen, wobei die zweite Untergruppe von PWM-Signalen 4 Arten von Tastverhältnissen umfasst, die jeweils 0/3, 1/3, 2/3, 3/3 betragen, und wobei es sich bei der Tastverhältniskombination von PWM-Signalen um eine PWM-Signalkombination handelt, die mindestens zwei beliebige Arten von Tastverhältnissen umfasst.

Vorzugsweise wird die Tastverhältniskombination von PWM-Signalen derart ausgebildet, dass sie jeweils anhand von High-Pegeln bzw. Low-Pegeln zusammengesetzt sind.

Eine Heizungssteuerungsvorrichtung zur Reduktion von Flackerstörungen unter Verwendung des obigen Verfahrens, umfasst ein Heizgerät, eine Temperaturerfassungseinheit, einen Steuerungsprozessor und eine Steuereinheit, wobei der Steuerungsprozessor dazu konfiguriert ist, basierend auf dem von der Temperaturerfassungseinheit erfassten Temperatursignal die Ausgangsleistung zu berechnen und in eine Tastverhältniskombination von PWM-Signalen umzurechnen, an die Steuereinheit auszugeben und damit das Ein- und Ausschalten des Heizgeräts anzusteuern.

Vorzugsweise umfasst die Vorrichtung ferner eine Nulldurchgangserfassungseinheit.

Im Vergleich mit dem Stand der Technik weist die vorliegende Erfindung die folgenden Vorteile auf:
1. Die vorliegende Erfindung stellt ein Heizungssteuerungsverfahren zur Reduktion von Flackerstörungen bereit, bei dem die Anforderungen bei der Flackermessung im Rahmen der elektromagnetischen Verträglichkeit hinreichend erfüllt werden können, ohne die Komplexität der Produktstruktur und der elektronischen Steuerungsschaltung zu erhöhen, so dass die Bauteilkosten und der Montageaufwand reduziert werden.
2. Bei dem erfindungsgemäßen Heizungssteuerungsverfahren zur Reduktion von Flackerstörungen kann mithilfe der Tastverhältniskombination von PWM-Signalen die Ausgangsleistung in einem Wertbereich von 0 - 2000 W beliebig reguliert werden, wobei in Abhängigkeit von durch den Benutzer eingestellten unterschiedlichen Parametern (Durchflussmenge, Wassertemperatur) sowie unterschiedlichen Wassereintrittstemperaturen eine große Wasseraustrittmenge bei konstanter Temperatur realisiert wird, und wobei gleichzeitig bewirkt wird, dass das Gesamtgerät die Anforderungen an Flackerstörungen im Rahmen der elektromagnetischen Verträglichkeit erfüllt.
3. Während der Temperatursteuerung werden Temperaturtendenz- und Leistungsfeedback als Korrektur und Kompensation verwendet, was zu einer Erhöhung der Reaktionsgeschwindigkeit und Stabilität bei der Temperatursteuerung führt.

Im Nachfolgenden wird die vorliegende Erfindung in Verbindung mit den beigefügten Figuren und Ausführungsbeispielen im Detail beschrieben. Das Heizungssteuerungsverfahren und die Heizungssteuerungsvorrichtung zur Reduktion von Flackerstörungen nach der vorliegenden Erfindung sind jedoch nicht auf die Ausführungsbeispiele beschränkt.

### Kurzbeschreibung der Zeichnung

Figur 1 zeigt ein Ablaufdiagramm des erfindungsgemäßen Verfahrens;
Figur 2 zeigt ein Signaldiagramm einer Tastverhältniskombination von PWM-Signalen gemäß einem Ausführungsbeispiel der vorliegenden Erfindung;
Figur 3 zeigt ein Strukturschema der erfindungsgemäßen Vorrichtung.

### Ausführungsformen der Erfindung

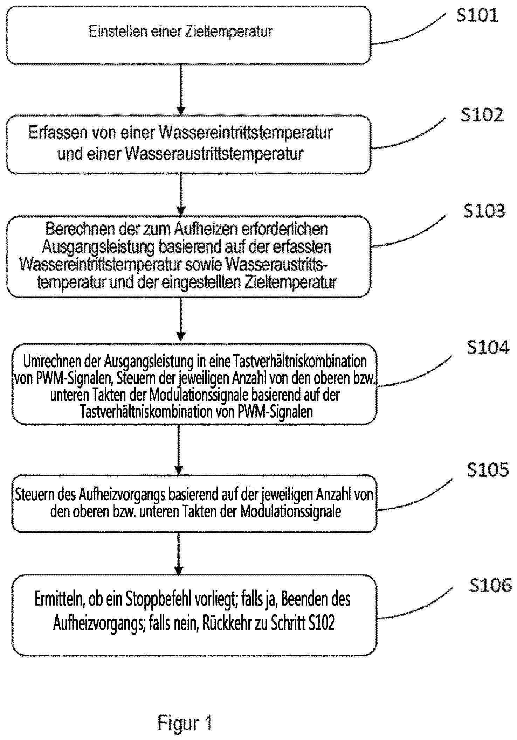

Figur 1 zeigt ein Ablaufdiagramm des erfindungsgemäßen Heizungssteuerungsverfahrens zur Reduktion von Flackerstörungen gemäß einem Ausführungsbeispiel. Hierbei wird ein kleiner Wassertank mit einem Volumen von höchstens 0,5 L zusammen mit einem bewährten Heizrohr mit einer vergleichsweise hohen Leistung (ab 1400 W) verwendet, wobei das Verfahren die folgenden Schritte umfasst:
S101: Zuerst wird eine Zieltemperatur eingestellt;
S102: Mithilfe eines Temperaturfühlers werden die Wassereintrittstemperatur und die Wasseraustrittstemperatur in Echtzeit erfasst;
S103: Die zum Aufheizen erforderliche Ausgangsleistung wird auf Grundlage der erfassten Wassereintrittstemperatur und Wasseraustrittstemperatur sowie der eingestellten Zieltemperatur berechnet. Als Verfahren zum Regeln der Wassertemperatur wird das bekannte PID-Regelverfahren eingesetzt. Dabei wird aus der Differenz zwischen der Wassereintrittstemperatur und der Zieltemperatur die Basiszahl P₀ berechnet, wobei gemäß dem Akkumulationswert der Differenz zwischen der Zieltemperatur und Wasseraustrittstemperatur der Proportionalitätsfaktor P₁ korrigiert wird. Dann wird in Abhängigkeit von den Bedingungen bezüglich der Leistungsrückkopplung sowie der Korrektur von Temperaturtendenz der Korrekturfaktor K berechnet, wobei es sich auch um andere Rückkopplungsmethoden zur Korrektur handeln kann. Schließlich wird die Ausgangsleistung P = f (P₀, P₁, K) berechnet.
S104: Die Ausgangsleistung wird in eine Tastverhältniskombination von PWM-Signalen umgerechnet, wonach die Anzahl von den oberen bzw. unteren Takten der Modulationssignale geregelt werden.

Vor dem Erfassen von einer Wassereintrittstemperatur und einer Wasseraustrittstemperatur wird zunächst eine entsprechende Beziehung zwischen der Ausgangsleistung und der Tastverhältniskombination von PWM-Signalen festgelegt.

Da die Ausgangsleistung P = volle Leistung P1*Q% ist, bedeutet dies de facto, dass eine Zuordnungsbeziehung zwischen dem Prozentsatz und der Tastverhältniskombination von PWM-Signalen festgelegt wird. Nach dem Gleichrichten des Wechselstroms liegt er gewöhnlich bei 100 Hz oder 120 Hz. Bei dem vorliegenden Ausführungsbeispiel wird 100 Hz gewählt, wobei die Breite jeder Halbwelle 10 ms beträgt, so dass ein bestimmter Zyklus nicht mehr als 40 ms dauert. Damit erhält man eine erste Untergruppe von PWM-Signalen mit einem Zyklus von 40 ms und eine zweite Untergruppe von PWM-Signalen mit einem Zyklus von 30 ms. Die erste Untergruppe von PWM-Signalen umfasst 5 Arten von Tastverhältnissen, wobei die entsprechenden Tastverhältnisse jeweils 0/4, 1/4, 2/4, 3/4, 4/4 betragen. Die zweite Untergruppe von PWM-Signalen umfasst 4 Arten von Tastverhältnissen, wobei die entsprechenden Tastverhältnisse jeweils 0/3, 1/3, 2/3, 3/3 betragen. Dabei ist die Tastverhältniskombination von PWM-Signalen eine PWM-Signalkombination, die zumindest zwei beliebige Arten von Tastverhältnissen umfasst. Tabelle 1 zeigt die Beziehung zwischen den Tastverhältnisse einzelner PWM-Signale und den entsprechenden Prozentsätzen. Selbstverständlich können auch beliebige andere Tastverhältnisse als Basis-Tastverhältnisse gewählt werden; hierzu erfolgt an dieser Stelle keine Einschränkung.

**Tabelle 1: Beziehung zwischen den Tastverhältnissen einzelner PWM-Signale und den entsprechenden Prozentsätzen**

| PWM-Tastverhältnis | Zyklus | Prozentsa tz |
|---|---|---|
| 3/4 | 40 ms | 75% |
| 2/3 | 30 ms | 67% |
| 2/4 | 40 ms | 50% |
| 1/3 | 30 ms | 33% |
| 1/4 | 40 ms | 25% |

Bei der Verwendung der gewählten Basis-Tastverhältnisse können zuerst 25% - 75% kombiniert werden. Nachstehend ist davon jeweils nur ein beispielhafter Fall aufgeführt. Selbstverständlich kann es sich auch um andere Kombinationsfälle handeln; hierzu erfolgt an dieser Stelle keine Einschränkung.

| Summenzahl Tastverhältnis 3/4 | Summenzahl Tastverhältnis 2/3 | Kombinierter Prozentsatz |
|---|---|---|
| 8 | 0 | 75% |
| 7 | 1 | 74% |
| 6 | 2 | 73% |
| 5 | 3 | 72% |
| 4 | 4 | 71% |
| 3 | 5 | 70% |
| 2 | 6 | 69% |
| 1 | 7 | 68% |
| 0 | 8 | 67% |

| Summenzahl Tastverhältnis 2/3 | Summenzahl Tastverhältnis 2/4 | Kombinierter Prozentsatz |
|---|---|---|
| 16 | 0 | 67% |
| 15 | 1 | 66% |
| 14 | 2 | 65% |
| 13 | 3 | 64% |
| 12 | 4 | 63% |
| 11 | 5 | 61% |
| 10 | 6 | 60% |
| 9 | 7 | 59% |
| 8 | 8 | 58% |
| 7 | 9 | 57% |
| 6 | 10 | 56% |
| 5 | 11 | 55% |
| 4 | 12 | 54% |
| 3 | 13 | 53% |
| 2 | 14 | 52% |
| 1 | 15 | 51% |
| 0 | 16 | 50% |

| Summenzahl Tastverhältnis 2/4 | Summenzahl Tastverhältnis 1/3 | Kombinierter Prozentsatz |
|---|---|---|
| 16 | 0 | 50% |
| 15 | 1 | 49% |
| 14 | 2 | 48% |
| 13 | 3 | 47% |
| 12 | 4 | 46% |
| 11 | 5 | 45% |
| 10 | 6 | 44% |
| 9 | 7 | 43% |
| 8 | 8 | 42% |
| 7 | 9 | 41% |
| 6 | 10 | 40% |
| 5 | 11 | 39% |
| 4 | 12 | 38% |
| 3 | 13 | 36% |
| 2 | 14 | 35% |
| 1 | 15 | 34% |
| 0 | 16 | 33% |

| Summenzahl Tastverhältnis 1/3 | Summenzahl Tastverhältnis 1/4 | Kombinierter Prozentsatz |
|---|---|---|
| 8 | 0 | 33% |
| 7 | 1 | 32% |
| 6 | 2 | 31% |
| 5 | 3 | 30% |
| 4 | 4 | 29% |
| 3 | 5 | 28% |
| 2 | 6 | 27% |
| 1 | 7 | 26% |
| 0 | 8 | 25% |

Gleiches gilt für 60 Hz-Wechselstrom. Das bedeutet, dass wie beim Gleichrichten von 120 Hz ebenfalls Steuerzyklen mit einer Dauer von 2, 3 oder 4 Halbwellen definiert werden. Selbstverständlich können auch PWM-Signale mit beliebigen Zyklen festgelegt werden.

Bei kombinierten Prozentsätzen von höchstens 25% wird eine Leistungskombination aus 25% und 0% verwendet. Bei kombinierten Prozentsätzen von mindestens 75% wird eine Leistungskombinationen aus 75% und 100% verwendet. Bei der Anwendung in der Praxis ist bei einer Steuerung mit Prozentsätzen von höchstens 25% bzw. mindestens 75% besonders schwierig, die Flackerstörungen des Heizgeräts zu unterdrücken. Dann wird eine Möglichkeit zur Verlängerung der Steuerungszeitspanne verwendet, so dass die Schwankungen der durchschnittlichen Leistung reduziert werden können. Abhängig von Durchflussmenge und Wassertankvolumen sowie Fließverhältnissen wird für die Steuerung bei den Leistungsumschaltungen ein langer Zyklus verwendet, um eine stabile Wasseraustrittstemperatur und hervorragende Flackereigenschaften zu erhalten.

Nach dem Umrechnen in die Tastverhältniskombination von PWM-Signalen wird die Anzahl von den oberen bzw. unteren Takten der Modulationssignale geregelt, indem sie anhand von High-Pegel bzw. Low-Pegel jeweils zusammengesetzt werden.

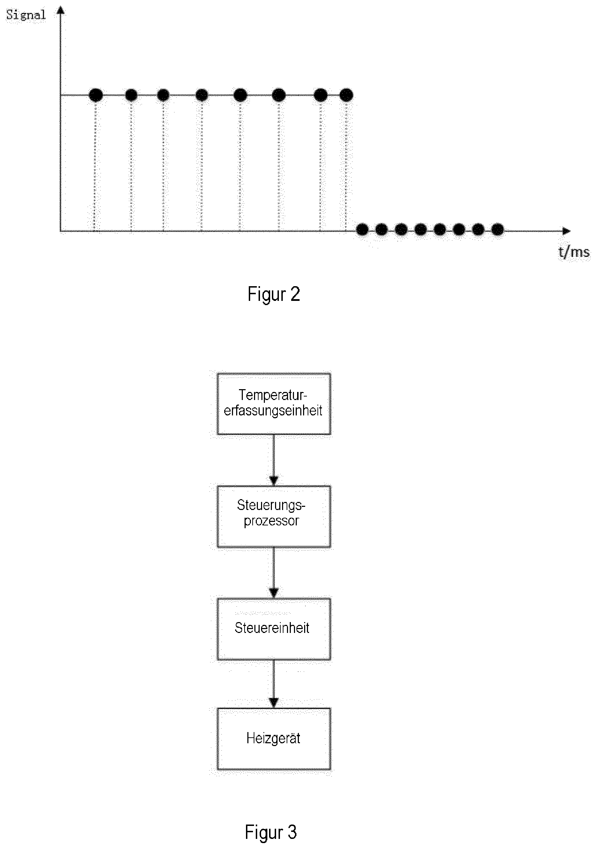

Sofern beispielsweise 7 PWM-Signale mit einem Tastverhältnis von 3/4 und 1 PWM-Signal mit einem Tastverhältnis von 2/3 zu einem Prozentsatz von 74% kombiniert werden, wie in Figur 2 zu sehen ist, werden 7 aufeinanderfolgende High-Pegel von 30 ms (40 ms*3/4) mit einem High-Pegel von 20 ms (30 ms*2/3) zusammengesetzt, also insgesamt 8 aufeinanderfolgende obere Takte. Gleichzeitig werden 7 aufeinanderfolgende Low-Pegel von 10 ms (40 ms*1/4) mit einem Low-Pegel von 10 ms (30 ms*1/3) zusammengesetzt, also insgesamt 8 aufeinanderfolgende untere Takte. Bei den Taktsignalen lassen sich verschiedene Zyklen und Tastverhältnisse unterscheiden.

S105: Steuern des Aufheizvorgangs in Abhängigkeit von den Zahlen von den oberen bzw. unteren Takten der Modulationssignale.

Vor einem Wechsel der oberen bzw. unteren Takte muss zuerst beurteilt werden, ob ein Nulldurchgangsignal vorliegt; falls ja, erfolgt der Wechsel der oberen bzw. unteren Takte.

In der Praxis wird bei jedem Takt eine Nulldurchgangsteuerung durchgeführt. D.h., dass unabhängig von den Tastverhältnissen die angesteuerten Flanken alle zum Nulldurchgang des Wechselstromsignals synchron sind. Die Nulldurchgangserfassung dient dazu, den Nullpunkt des Wechselstroms zu erfassen, mit dessen Koordination eine Laststeuerung umgesetzt werden kann. Dabei handelt es sich bei der Thyristor-Nulldurchgangserfassung um das Durchschalten oder Abschalten des Thyristors in der Nähe des Nullpunktes, was bedeutet, dass in der Nähe des Nullpunktes die Verbraucherlasten schnell in die Rückführungsschaltung eingekoppelt oder von der Rückführungsschaltung getrennt werden. Es ist bekannt, dass bei einem sehr großen Strom das Durchschalten oder Unterbrechen von Schaltungen zu einem starken Stromstoß bei Lasten und Stromversorgung führen kann. Je größer der Strom ist, desto stärker wird die Auswirkung, was zahlreiche Störungen der Oberschwingungen im Stromnetz verursachen kann. Wenn Lasten während des Nullpunktes des Stromflusses ein- oder abgeschaltet werden, können die Auswirkungen minimiert werden, so dass Beeinträchtigungen wegen häufigen Zu- und Abschaltens von Lasten vermieden werden. Deshalb ist die Nulldurchgangserfassung bei den Regelschaltungen von Hochleistungslasten sehr sinnvoll.

Die Funktionen zur Nulldurchgangserfassung können durch Vorsehen einer Nulldurchgangserfassungsschaltung oder durch Verwendung von Optokopplern mit Nulldurchgangserfassungsfunktion umgesetzt werden. Bei dem vorliegenden Ausführungsbeispiel wurde ein bidirektionaler Koppler verwendet. Wenn sich der Strom aus der Wechselstromquelle dem Nullpunkt nähert, leuchtet die LED-Lampe des Optokopplers nicht und gibt so High-Pegel aus; nachdem der Wechselstrom den Nullpunkt passiert hat, leuchtet die LED auf und gibt so Low-Pegel aus.

S106: Ermitteln, ob ein Stoppbefehl vorliegt; falls ja, Beenden des Aufheizvorgangs; falls nein, Rückkehr zu Schritt S102.

In einem weiteren Aspekt stellt das vorliegende Ausführungsbeispiel ferner eine Vorrichtung bereit, in der das vorstehende Heizungssteuerungsverfahren zur Reduktion von Flackerstörungen verwendet wird. Wie in Figur 3 zu sehen ist, umfasst die Vorrichtung ein Heizgerät, eine Temperaturerfassungseinheit, einen Steuerungsprozessor und eine Steuereinheit, wobei der Steuerungsprozessor dazu konfiguriert ist, basierend auf dem von der Temperaturerfassungseinheit erfassten Temperatursignal die Ausgangsleistung zu berechnen und in eine Tastverhältniskombination von PWM-Signalen umzurechnen, dann an die Steuereinheit auszugeben und damit das Ein- und Ausschalten des Heizgeräts anzusteuern. Die Vorrichtung umfasst ferner eine Nulldurchgangserfassungseinheit.

Die vorstehenden Ausführungsbeispiele dienen lediglich der weitergehenden Erläuterung der vorliegenden Erfindung und bedeuten keine Einschränkung des Schutzumfangs. Alle Vereinfachungen, gleichwertigen Veränderungen und Modifikationen, die auf Grundlage des technischen Konzepts der vorliegenden Erfindung an den vorstehend beschriebenen Ausführungsbeispielen vorgenommen werden, fallen in den Schutzumfang des technischen Konzepts der vorliegenden Erfindung. Die Erfindung als solche wird durch die unabhängigen Ansprüche 1 und 6 repräsentiert.

### Bezugszeichenliste

- S101: Verfahrensschritt
- S102: Verfahrensschritt
- S103: Verfahrensschritt
- S104: Verfahrensschritt
- S105: Verfahrensschritt
- S106: Verfahrensschritt

## Patentansprüche

1. Heizungssteuerungsverfahren zur Reduktion von Flickerstörungen für eine Heizvorrichtung eines elektrischen Warmwasserbereiters, aufweisend die folgenden Schritte:
S1: Einstellen einer Zieltemperatur;
S2: Erfassen einer Wassereintrittstemperatur des in die Heizvorrichtung einströmenden Wassers und einer Wasseraustrittstemperatur des austretenden Wassers;
S3: Berechnen der zum Aufheizen erforderlichen Ausgangsleistung P auf Grundlage der erfassten Wassereintrittstemperatur und Wasseraustrittstemperatur sowie der eingestellten Zieltemperatur, wobei die zum Aufheizen erforderliche Ausgangsleistung P die volle Heizleistung der Heizvorrichtung P1, multipliziert mit einem Prozentsatz Q% ist;
S4: Umrechnen der Ausgangsleistung P in eine Tastverhältniskombination von PWM-Signalen, wobei eine Tastverhältniskombination eine Kombination ist aus
- einer ersten Anzahl von ein erstes Tastverhältnis aufweisenden PWM-Steuersignalzyklen aus einer ersten Untergruppe von PWM-Signalen mit einer ersten Zyklusdauer und
- einer zweiten Anzahl von ein zweites Tastverhältnis aufweisenden PWM-Steuersignalzyklen aus einer zweiten Untergruppe von PWM-Signalen mit einer abweichenden zweiten Zyklusdauer,
wobei die PWM-Steuersignalzyklen eine Zyklusdauer von 2, 3 oder 4 Halbwellen haben und aus High- und Low-Pegeln zusammengesetzt sind, wobei ein Wechsel vom Low- zum High-Pegel und umgekehrt nur bei einem Nulldurchgang der die Heizvorrichtung ansteuernden Spannung erfolgt, so dass sich eine Taktperiode des Umschaltens der PWM-Signale von der Dauer der Halbwelle ergibt,
so dass sich der Prozentsatz Q% aus der Summe aus der mit dem ersten Tastverhältnis multiplizierten ersten Anzahl und der mit dem zweiten Tastverhältnis multiplizierten zweiten Anzahl, geteilt durch die Summe aus erster und zweiter Anzahl ergibt; und
Erzeugen der jeweiligen Anzahl von High- bzw. Low-Takten eines Modulationssignals basierend auf der Tastverhältniskombination von PWM-Signalen;
S5: Steuern des Aufheizvorgangs basierend auf der jeweiligen Anzahl der High- bzw. Low-Takte des Modulationssignals;
S6: Ermitteln, ob ein Stoppbefehl vorliegt; falls ja, Beenden des Aufheizvorgangs; falls nein, Rückkehr zu Schritt S2.

2. Heizungssteuerungsverfahren zur Reduktion von Flickerstörungen nach Anspruch 1, **dadurch gekennzeichnet, dass** vor dem Einstellen der Zieltemperatur in Schritt S1 eine Zuordnungsbeziehung zwischen Ausgangsleistungen und PWM-Tastverhältniskombinationen ermittelt wird.

3. Heizungssteuerungsverfahren zur Reduktion von Flickerstörungen nach Anspruch 1, **dadurch gekennzeichnet, dass** das Berechnen der zum Aufheizen erforderlichen Ausgangsleistung basierend auf der erfassten Wassereintrittstemperatur und Wasseraustrittstemperatur sowie der eingestellten Zieltemperatur in Schritt S3 insbesondere unter Verwendung eines PID-Regelverfahrens erfolgt.

4. Heizungssteuerungsverfahren zur Reduktion von Flickerstörungen nach Anspruch 1, **dadurch gekennzeichnet, dass** das Berechnen der zum Aufheizen erforderlichen Ausgangsleistung basierend auf der erfassten Wassereintrittstemperatur und Wasseraustrittstemperatur sowie der eingestellten Zieltemperatur in Schritt S3 eine Einbeziehung eines Temperaturtendenz- und Leistungsfeedbacks als Korrektur umfasst.

5. Heizungssteuerungsverfahren zur Reduktion von Flickerstörungen nach Anspruch 1, **dadurch gekennzeichnet, dass** die erste Untergruppe von PWM-Signalen fünf PWM-Steuersignalzyklen mit Tastverhältnissen umfasst, die 0/4, 1/4, 2/4, 3/4 oder 4/4 betragen, und die zweite Untergruppe von PWM-Signalen vier PWM-Steuersignalzyklen mit Tastverhältnissen umfasst, die 0/3, 1/3, 2/3 oder 3/3 betragen.

6. Heizungssteuerungsvorrichtung zur Reduktion von Flickerstörungen unter Verwendung des Verfahrens nach einem der Ansprüche 1-5, **dadurch gekennzeichnet, dass** die Vorrichtung eine Heizvorrichtung, eine Temperaturerfassungseinheit, einen Steuerungsprozessor und eine Steuereinheit umfasst, wobei der Steuerungsprozessor dazu konfiguriert ist, basierend auf dem von der Temperaturerfassungseinheit erfassten Temperatursignal die Ausgangsleistung zu berechnen und in eine Tastverhältniskombination von PWM-Signalen umzurechnen, an die Steuereinheit auszugeben und damit das Ein- und Ausschalten der Heizvorrichtung anzusteuern.

7. Heizungssteuerungsvorrichtung zur Reduktion von Flickerstörungen nach Anspruch 6 , **dadurch gekennzeichnet, dass** die Vorrichtung ferner eine Nulldurchgangserfassungseinheit umfasst.

## Claims

1. Heating control method for reducing flicker disturbances for a heating apparatus of an electrical water heater, having the following steps:
S1: setting a target temperature;
S2: detecting water inlet temperature of the water flowing into the heating apparatus and a water outlet temperature of the emerging water;
S3: calculating the output power P required for heating based on the detected water inlet temperature and water outlet temperature and the target temperature that has been set, wherein the output power P required for heating is the full heating power of the heating apparatus P1 multiplied by a percentage Q%;
S4: converting the output power P into a duty cycle combination of PWM signals, wherein a duty cycle combination is a combination of
- a first number of PWM control signal cycles having a first duty cycle from a first subgroup of PWM signals having a first cycle duration and
- a second number of PWM control signal cycles having a second duty cycle from a second subgroup of PWM signals having a differing, second cycle duration,
wherein the PWM control signal cycles have a cycle duration of 2, 3 or 4 half-waves and are composed of high and low levels, wherein a change from the low level to the high level and vice versa is effected only at a zero crossing of the voltage controlling the heating apparatus, so that a clock period of switching the PWM signals of the duration of the half-cycle is obtained,
such that the percentage Q% is the sum of the first number multiplied by the first duty cycle and the second number multiplied by the second duty cycle, divided by the sum of the first and second number; and
generating the respective number of high clock pulses and low clocks of a modulation signal on the basis of the duty cycle combination of PWM signals;
S5: controlling the heating process on the basis of the respective number of high clocks and low clocks of the modulation signal;
S6: determining whether there is a stop command; if so, terminating the heating process; if not, returning to step S2.

2. Heating control method for reducing flicker disturbances according to Claim 1, **characterized in that**, before setting the target temperature in step S1, an assignment relationship between output powers and PWM duty cycle combinations is determined.

3. Heating control method for reducing flicker disturbances according to Claim 1, **characterized in that** the calculation of the output power required for heating on the basis of the captured water inlet temperature and water output temperature and the target temperature that has been set in step S3 is carried out, in particular, using a PID control method.

4. Heating control method for reducing flicker disturbances according to Claim 1, **characterized in that** the calculation of the output power required for heating on the basis of the captured water inlet temperature and water outlet temperature and the target temperature that has been set in step S3 comprises including temperature trend and power feedback as a correction.

5. Heating control method for reducing flicker disturbances according to Claim 1, **characterized in that** the first subgroup of PWM signals comprises five PWM control signal cycles with duty cycles of 0/4, 1/4, 2/4, 3/4 or 4/4, and the second subgroup of PWM signals comprises four PWM control signal cycles with duty cycles of 0/3, 1/3, 2/3 or 3/3.

6. Heating control apparatus for reducing flicker disturbances using the method according to one of Claims 1-5, **characterized in that** the apparatus comprises a heating apparatus, a temperature capture unit, a control processor and a control unit, wherein the control processor is configured to calculate the output power on the basis of the temperature signal captured by the temperature capture unit and to convert it into a duty cycle combination of PWM signals, to output it to the control unit and to therefore control the switching-on and switching-off of the heating apparatus.

7. Heating control apparatus for reducing flicker disturbances according to Claim 6, **characterized in that** the apparatus also comprises a zero crossing capture unit.

## Revendications

1. Procédé de commande de chauffage permettant de réduire des perturbations par papillotement pour un dispositif de chauffage d'un chauffe-eau électrique, présentant les étapes suivantes consistant à :
S1 : régler une température cible ;
S2 : détecter une température d'entrée d'eau de l'eau qui entre dans le dispositif de chauffage et une température de sortie d'eau de l'eau qui sort ;
S3 : calculer la puissance de sortie P nécessaire à la mise à température, sur la base de la température d'entrée d'eau et de la température de sortie d'eau détectées ainsi que de la température cible réglée, dans lequel la puissance de sortie P nécessaire à la mise à température est la pleine puissance de chauffage du dispositif de chauffage P1, multipliée par un pourcentage Q% ;
S4 : convertir la puissance de sortie P en une combinaison de rapports cycliques de signaux PWM, dans lequel une combinaison de rapports cycliques est une combinaison composée
- d'un premier nombre de cycles de signaux de commande PWM présentant un premier rapport cyclique parmi un premier sous-groupe de signaux PWM ayant une première durée de cycle, et
- d'un deuxième nombre de cycles de signaux de commande PWM présentant un deuxième rapport cyclique parmi un deuxième sous-groupe de signaux PWM ayant une deuxième durée de cycle différente,
dans lequel les cycles de signaux de commande PWM présentent une durée de cycle de 2, 3 ou 4 demi-ondes et sont composés de niveaux haut et bas, dans lequel un changement du niveau bas au niveau haut et vice versa n'a lieu qu'en cas de passage par zéro de la tension pilotant le dispositif de chauffage de sorte qu'il en résulte une période de cycle de la commutation des signaux PWM de la durée de la demi-onde,
de sorte que le pourcentage Q% résulte de la somme du premier nombre multiplié par le premier rapport cyclique et du deuxième nombre multiplié par le deuxième rapport cyclique, divisée par la somme du premier et du deuxième nombre ; et
générer le nombre respectif de cycles haut ou bas d'un signal de modulation sur la base de la combinaison de rapports cycliques des signaux PWM ;
S5 : commander l'opération de mise à température sur la base du nombre respectif des cycles haut ou bas du signal de modulation ;
S6 : déterminer si une instruction d'arrêt est présente ; si oui, terminer l'opération de mise à température ; si non, revenir à l'étape S2.

2. Procédé de commande de chauffage permettant de réduire des perturbations par papillotement selon la revendication 1, **caractérisé en ce qu'**avant le réglage de la température cible à l'étape S1, une relation d'association entre les puissances de sortie et les combinaisons de rapports cycliques PWM est déterminée.

3. Procédé de commande de chauffage permettant de réduire des perturbations par papillotement selon la revendication 1, **caractérisé en ce que** le calcul de la puissance de sortie nécessaire à la mise à température est effectuée sur la base de la température d'entrée d'eau et de la température de sortie d'eau détectées ainsi que de la température cible réglée à l'étape S3, en particulier en utilisant un procédé de régulation PID.

4. Procédé de commande de chauffage permettant de réduire des perturbations par papillotement selon la revendication 1, **caractérisé en ce que** le calcul de la puissance de sortie nécessaire à la mise à température sur la base de la température d'entrée d'eau et de la température de sortie d'eau détectées ainsi que de la température cible réglée à l'étape S3 comprend comme correction une intégration d'une rétroaction de tendance de température et de puissance.

5. Procédé de commande de chauffage permettant de réduire des perturbations par papillotement selon la revendication 1, **caractérisé en ce que** le premier sous-groupe de signaux PWM comprend cinq cycles de signaux de commande PWM avec des rapports cycliques de 0/4, 1/4, 2/4, 3/4 ou 4/4, et le deuxième sous-groupe de signaux PWM comprend quatre cycles de signaux de commande PWM avec des rapports cycliques de 0/3, 1/3, 2/3 ou 3/3.

6. Dispositif de commande de chauffage permettant de réduire des perturbations par papillotement en utilisant le procédé selon l'une quelconque des revendications 1 à 5, **caractérisé en ce que** le dispositif comprend un dispositif de chauffage, une unité de détection de température, un processeur de commande et une unité de commande, dans lequel le processeur de commande est configuré, sur la base du signal de température détecté par l'unité de détection de température, calculer la puissance de sortie et la convertir en une combinaison de rapports cycliques de signaux PWM, les sortir à l'unité de commande et piloter ainsi la mise sous et hors tension du dispositif de chauffage.

7. Dispositif de commande de chauffage permettant de réduire des perturbations par papillotement selon la revendication 6, **caractérisé en ce que** le dispositif comprend en outre une unité de détection de passage par zéro.
